# EUROPÄISCHE PATENTSCHRIFT

(11) **EP 1 332 073 B1**
(45) Veröffentlichungstag und Bekanntmachung des Hinweises auf die Patenterteilung: **03.05.2006**
(21) Anmeldenummer: 01974048.9
(22) Anmeldetag: 15.09.2001
(51) Int. Cl.: B60S 1/08

(54) **KONTAKTSCHEIBENSYSTEM UND VERFAHREN ZUM STEUERN EINES SCHEIBENWISCHERMOTORS**
CONTACT WASHER SYSTEM AND METHOD FOR CONTROLLING A WINDSCREEN WIPER MOTOR
SYSTEME DE RONDELLE DE CONTACT ET PROCEDE DE COMMANDE D'UN MOTEUR D'ESSUIE-GLACE

(30) Priorität: 27.10.2000 DE 10053303
(43) Veröffentlichungstag der Anmeldung: 06.08.2003
(73) Patentinhaber: ROBERT BOSCH GMBH, 70442 Stuttgart (DE)
(72) Erfinder: GRASS, Ansgar, 77746 Schutterwald-Langhurst (DE)
(86) Internationale Anmeldenummer: PCT/DE2001/003555
(87) Internationale Veröffentlichungsnummer: WO 2002/034586

(56) Entgegenhaltungen:
- EP-A- 0 102 095
- US-A- 3 659 083
- US-A- 4 390 757
- US-A- 4 609 794

## Beschreibung

Die Erfindung betrifft ein Kontaktscheibensystem mit einer Steuerung, einer drehbaren Kontaktscheibe und mehreren Kontaktelementen, wobei die Kontaktscheibe mehrere Bahnen aufweist und jedes Kontaktelement einer Bahn zugeordnet ist, wobei die Bahnen elektrisch leitende Bereiche und elektrisch isolierende Bereiche aufweisen und wobei durch die elektrisch leitenden Bereiche und die elektrisch isolierenden Bereiche logische Zustände codiert sind. Die Erfindung betrifft ferner ein Verfahren zum Steuern eines Scheibenwischermotors mit einem Kontaktscheibensystem, bei dem mit mehreren Kontaktelementen mehrere Bahnen einer drehbaren Kontaktscheibe kontaktiert werden, wobei die Bahnen elektrisch leitende Bereiche und elektrisch isolierende Bereiche aufweisen und wobei durch die elektrisch leitenden Bereiche und die elektrisch isolierenden Bereiche logische Zustände codiert sind. Die Erfindung betrifft ferner einen Scheibenwischermotor.

### Stand der Technik

Es ist bekannt, gattungsgemäße Kontaktscheibensysteme zum Steuern von Scheibenwischern zu verwenden. Eine KontaktScheibe eines gattungsgemäßen Kontaktscheibensystems dreht sich im Allgemeinen synchron mit dem Scheibenwischermotor. Kontaktelemente überstreichen die elektrisch leitenden Bereiche und die elektrisch isolierenden Bereiche der Kontaktscheibe. Hieraus erhält man Aufschluss über die momentane Stellung der Scheibenwischer. Grundsätzlich ist es so, dass für kompliziertere Steuerungsvorgänge, das heißt für Steuerungsvorgänge, bei denen eine größere Anzahl von Scheibenwischerstellungen codiert werden sollen, eine größere Anzahl an Bahnen auf der Kontaktscheibe erforderlich sind, wobei jede dieser Bahnen von mindestens einem Kontaktelement kontaktiert wird.

Eine erhöhte Anzahl von Scheibenwischerzuständen muss beispielsweise bei Fahrzeugen codiert werden, bei welchen sich sowohl die Heckklappe als auch die Heckscheibe öffnen lassen. Die Heckwischermotoren müssen so ausgelegt sein, dass beim Öffnen der Heckscheibe der oder die Wischhebel außerhalb der Scheibe in einer erweiterten Parkstellung (EPS) abparken. Diese Funktion lässt sich beispielsweise mit einem getriebelosen, reversierenden Heckwischermotor realisieren. Dieser Motor wird in der oberen und unteren Umkehrstellung elektronisch umgepolt, entweder mit Doppelrelais oder Halbleiter H-Brücke. Wird eine Wischhebelposition in der erweiterten Parkstellung gewünscht, welche im Allgemeinen unterhalb der Parkstellung liegt, wird der Motor in der unteren Umkehrstellung nicht umgepolt. Ebenfalls ist es möglich, einen Pendelgetriebemotor mit Reversierelektronik zu verwenden. Bei diesem Motor werden die obere Umkehrstellung und die erweiterte Parkstellung mechanisch über das Getriebe realisiert. Die untere Umkehrstellung beziehungsweise die Parkstellung wird elektronisch realisiert, indem der Motor in der Parkstellung elektronisch umgepolt wird, entweder mit Doppelrelais oder Halbleiter H-Brücke.

Zur Realisierung dieser beispielhaft genannten Heckwischerfunktionen müssen sechs unterschiedliche Zustände codiert werden und der Reversierelektronik in der Steuerung übermittelt werden. Bei diesen Zuständen handelt es sich um die Zustände:
- obere Umkehrstellung
- Wischfeld
- Segment vor Parkstellung
- Parkstellung beziehungsweise untere Umkehrstellung
- Segment nach Parkstellung beziehungsweise zwischen Parkstellung und erweiterter Parkstellung
- erweiterte Parkstellung.

In vielen Fällen ist es erwünscht, Kontaktscheiben mit einer möglichst geringen Anzahl von Bahnen zu verwenden. Beispielsweise kann der Fall auftreten, dass die Kontaktelemente, welche allgemein als Schleifer ausgebildet sind, und die Kontaktbahnen auf der gleichen Seite wie das Umsetzgetriebe des Pendelgetriebemotors angeordnet sind. In diesem Fall haben mitunter nur zwei Kontaktbahnen Platz auf der Kontaktscheibe. Daher ist die Anzahl der möglichen Codierungen begrenzt.

### Vorteile der Erfindung

Die Erfindung baut auf dem gattungsgemäßen Kontaktscheibensystem dadurch auf, dass die Kontaktscheibe n Bahnen mit n ≥ 2 aufweist und dass durch die n Bahnen und durch die Abfolge der elektrisch leitenden Bereiche und der elektrisch isolierenden Bereiche N logische Zustände codiert werden, wobei N > 2ⁿ. Mit der Erfindung gelingt es, trotz begrenzter Anzahl von Kontaktbahnen auf einer Kontaktscheibe eine anwendungsgerechte Anzahl von Codierungen zur Verfügung zu stellen. Dies wird dadurch erreicht, dass von der Steuerung des Kontaktscheibensystems nicht nur die derzeit vorliegenden logischen Zustände analysiert werden, welche durch elektrisch leitende Bereiche und elektrisch isolierende Bereiche der Kontaktbahnen erzeugt werden, sondern zusätzlich die Übergänge zwischen den verschiedenen Zuständen von der Steuerung registriert werden.

Bevorzugt weist die Kontaktscheibe zwei Bahnen auf. Damit ist die Kontaktscheibe bei Systemen einsetzbar, bei denen die Schleifer und die Kontaktbahnen auf der gleichen Seite wie das Umsetzgetriebe des Pendelgetriebemotors angeordnet sind.

Die Erfindung ist besonders dadurch vorteilhaft, dass bei einer Kontaktscheibe mit zwei Bahnen sechs logische Zustände codiert werden. Unterteilt man zwei Bahnen in elektrisch leitende und elektrisch isolierende Bereiche und identifiziert man beispielsweise die elektrisch leitenden Bereiche mit logisch 0 und die elektrisch isolierenden Bereiche mit logisch 1, so sind durch Kombination dieser Bits 2² = 4 Zustände codierbar. Mit der vorliegenden Erfindung gelinge es, beispielsweise sechs Zustände zu codieren und somit eine vorteilhafte Steuerung für einen Heckwischermotor mit erweiterter Parksreliung zur Verfügung zu stellen.

Die Erfindung ist besonders dadurch nützlich, dass ein erster Zustand einer oberen Umkehrstellung entspricht, dass ein zweiter Zustand einem Wischfeld entspricht, dass ein dritter Zustand ein Zustand vor einer Parkstellung ist, dass ein vierter Zustand eine Parkstellung ist, dass ein fünfter Zustand ein Zustand nach einer Parkstellung ist und dass ein sechster Zustand eine erweiterte Parkstellung ist. Diese Zustände reichen aus, um die erforderlichen Scheibenwischerfunktionen zu realisieren, welche bei Heckwischermotoren benötigt werden, die bei zu öffnenden Heckscheiben einsetzbar sind.

Von besonderem Vorteil ist es, dass im ersten Zustand eine erste Bahn elektrisch leitend ist und eine zweite Bahn elektrisch isolierend ist, dass im zweiten Zustand die erste Bahn und die zweite Bahn elektrisch leitend sind, dass im dritten Zustand die erste Bahn und die zweite Bahn elektrisch isolierend sind, dass im vierten Zustand die erste Bahn elektrisch isolierend ist und die zweite Bahn elektrisch leitend ist, dass im fünften Zustand die erste Bahn und die zweite Bahn elektrisch leitend sind, dass im sechsten Zustand die erste Bahn elektrisch leitend ist und die zweite Bahn elektrisch isolierend ist und dass die Zustände in der Reihenfolge ihrer Nummerierung aufeinanderfolgen. Handelt es sich bei dem vierten Zustand beispielsweise um die Parkstellung des Scheibenwischers, so werden in diesem Zustand von den Kontaktelementen ein elektrisch isolierender Bereich der ersten Bahn und ein elektrisch leitender Bereich der zweiten Bahn kontaktiert. Der Steuerung wird somit die Bitkombination 1/0 übermittelt. Bewegt sich der Scheibenwischer nun aus der Parkstellung hinaus in Richtung auf das Wischfeld, so wird der Steuerung zunächst eine dem dritten Zustand entsprechende Bitkombination 1/1 übermittelt und daraufhin die Bitkombination 0/0. Bewegt sich der Scheibenwischer hingegen aus der Parkstellung weiter in Richtung auf die erweiterte Parkstellung, so wird der Steuerung sogleich im Anschluss an die Bitkombination 1/0 die Bitkombination 0/0 übermittelt. Daher wird der Steuerung durch die Übergänge zwischen den Zuständen die erforderliche Information bezüglich der Zustände des Scheibenwischers übermittelt.

Es ist von besonderem Vorteil, wenn zwei Kontaktelemente zum Abgreifen der Zustandsinformation vorgesehen sind und wenn zwei Kontaktelemente zum Zuführen einer Versorgungsspannung vorgesehen sind. Zwei Kontaktelemente reichen aus, um die Zustandsinformation von den zwei Bahnen abzugreifen. Zwei Kontaktelemente zum Zuführen einer Versorgungsspannung sind nützlich, da es Zustände gibt, bei denen sowohl die erste Bahn als auch die zweite Bahn elektrisch isolierend sind, wodurch Segmente der Kontaktscheibe komplett voneinander isoliert werden.

Vorzugsweise ist die obere Umkehrstellung mechanisch durch ein Pendelgetriebe realisiert, die Parkstellung und die erweiterte Parkstellung entsprechen unseren UmkehrStellungen, und die untere Umkehrstellung in Parklage ist ist durch Umpolen des Motors über die Steuerung realisiert. Damit lässt sich das erfindungsgemäße Kontaktscheibensystem in vorteilhafter weise im Zusammenhang mit einem Pendelgetriebemotor mit Reversierelektronik einsetzen.

Besonders bevorzugt ist es, wenn nach dem Einschalten einer Zündung eines Kraftfahrzeuges beziehungsweise nach der Anwahl einer Scheibenwischerfunktion bei Nischhebelposition in Parklage eine Initialisierung des Kontaktscheibensystems erfolgt, indem die Parkstellung verlassen wird und abhängig von der Änderung der Codierung auf die Polung des Scheibenwischermotors geschlossen wird. Im abgeschalteten Zustand der Zündung eines Kraftfahrzeuges wird sich der Scheibenwischer im Allgemeinen in parkstellung befinden. Wird nun die Zündung wieder eingeschaltet, so ist der Steuerung im Allgemeinen die Polung des Scheibenwischermotors nicht bekannt. Daher kennt die Steuerung auch nicht die Bewegungsrichtung des Scheibenwischers. Zu diesem Zweck wird der Scheibenwischer mit der derzeit vorliegenden Polung des Scheibenwischermotors aus der Parkstellung hinausbewegt. In Abhängigkeit der benachbarten Codierung erhält die Steuerung dann Informationen über die Polung des Motors, wodurch alle Informationen im Hinblick auf eine spätere Inbetriebnahme vorliegen. Im Anschluss an die Initialisierung kann der Scheibenwischer wieder in die Parkstellung zurückgeführt werden. Damit bei der Initialisierung der Wischerhebel einen möglichst kleinen Winkel überstreicht, ist das Segment der Kontaktscheibe für die Parkstellung möglichst klein zu wählen.

Die Erfindung baut auf dem gattungsgemäßen Verfahren dadurch auf, dass die Kontaktscheibe n Bahnen mit n ≥ 2 aufweist und dass durch die n Bahnen und durch die Abfolge der elektrisch leitenden Bereiche und der elektrisch isolierenden Bereiche N logische Zustände codiert werden, wobei N > 2ⁿ. Mit der Erfindung gelingt es, trotz begrenzter Anzahl von Kontaktbahnen auf einer Kontaktscheibe eine anwendungsgerechte Anzahl von Codierungen zur Verfügung zu stellen. Dies wird dadurch erreicht, dass von der Steuerung des Kontaktscheibensystems nicht nur die derzeit vorliegenden logischen Zustände analysiert werden, welche durch elektrisch leitende Bereiche und elektrisch isolierende Bereiche der Kontaktbahnen erzeugt werden, sondern zusätzlich die Übergänge zwischen den verschiedenen Zuständen von der Steuerung registriert werden.

Das Verfahren ist besonders dann vorteilhaft, wenn die Kontaktscheibe zwei Bahnen aufweist. Damit ist die Kontaktscheibe bei Systemen einsetzbar, bei denen die Schleifer und die Kontaktbahnen auf der gleichen Seite wie das Umsetzgetriebe des Pendelgetriebemotors angeordnet sind.

Vorzugsweise werden bei einer Kontaktscheibe mit zwei Bahnen sechs logische Zustände codiert. Unterteilt man zwei Bahnen in elektrisch leitende und elektrisch isolierende Bereiche und identifiziert man beispielsweise die elektrisch leitenden Bereiche mit logisch 0 und die elektrisch isolierenden Bereiche mit logisch 1, so sind durch Kombination dieser Bits 2² = 4 Zustände codierbar. Mit der vorliegenden Erfindung gelingt es, beispielsweise sechs Zustände zu codieren und somit eine vorteilhafte Steuerung für einen Heckwischermotor mit erweiterter Parkstellung zur Verfügung zu stellen.

Weiterhin ist das erfindungsgemäße Verfahren besonders dadurch vorteilhaft, dass ein erster Zustand einer oberen Umkehrstellung entspricht, dass ein zweiter Zustand einem Wischfeld entspricht, dass ein dritter Zustand ein Zustand vor einer Parkstellung ist, dass ein vierter Zustand eine Parkstellung ist, dass ein fünfter Zustand ein Zustand nach einer Parkstellung ist und dass ein sechster Zustand eine erweiterte Parkstellung ist. Diese Zustände reichen aus, um die erforderlichen Scheibenwischerfunktionen zu realisieren, welche bei Heckwischermotoren benötigt werden, die bei zu Öffnenden Heckscheiben einsetzbar sind.

Die Erfindung ist dadurch von besonderem Kurzen, dass im ersten Zustand eine erste Bahn elektrisch leitend ist und eine zweite Bahn elektrisch isolierend ist, dass im zweiten Zustand die erste Bahn und die zweite Bahn elektrisch leitend sind, dass im dritten Zustand die erste Bahn und die zweite Bahn elektrisch isolierend sind, dass im vierten Zustand die erste Bahn elektrisch isolierend ist und die zweite Bahn elektrisch leitend ist, dass im fünften Zustand die erste Bahn und die zweite Bahn elektrisch leitend sind, dass im sechsten Zustand die erste Bahn elektrisch leitend ist und die zweite Bahn elektrisch isolierend ist und dass die Zustände in der Reihenfolge ihrer Nummerierung aufeinanderfolgen. Handelt es sich bei dem vierten Zustand beispielsweise um die Parkstellung des Scheibenwischers, so werden in diesem Zustand von den Kontaktelementen ein elektrisch isolierender Bereich der ersten Bahn und ein elektrisch leitender Bereich der zweiten Bahn kontaktiert. Der Steuerung wird somit die Bitkombination 1/0 übermittelt. Bewegt sich der Scheibenwischer nun aus der Parkstellung hinaus in Richtung auf das Wischfeld, so wird der Steuerung zunächst eine dem dritten Zustand entsprechende Bitkombination 1/1 übermittelt und daraufhin die Bitkombination 0/0. Bewegt sich der Scheibenwischer hingegen aus der Parkstellung weiter in Richtung auf die erweiterte Parkstellung, so wird der Steuerung sogleich im Anschluss an die Bitkombination 1/0 die Bitkombination 0/0 übermittelt. Daher wird der Steuerung durch die Übergänge zwischen den Zuständen die erforderliche Information bezüglich der Zustände des Scheibenwischers übermittele.

Vorzugsweise sind zwei Kontaktelemente zum Abgreifen der Zustandsinformation vorgesehen, und zwei Kontaktelemente sind zum Zuführen einer Versorgungsspannung vorgesehen. Zwei Kontaktelemente reichen aus, um die Zustandsinformation von den zwei Bahnen abzugreifen. Zwei Kontaktelemente zum Zuführen einer Versorgungsspannung sind nützlich, da es Zustände gibt, bei denen sowohl die erste Bahn als auch die zweite Bahn elektrisch isolierend sind, wodurch Segmente der Kontaktscheibe komplett voneinander isoliert werden.

Es ist bevorzugt, dass die obere Umkehrstellung mechanisch durch ein Pendelgetriebe realisiert ist, dass die Parkstellung und die erweiterte Parkstellung unteren Umkehrstellungen entsprechen und dass die Umkehrstellung in Parklage durch Umpolen des Motors über die Steuerung realisiert sind. Die elektrische Umpolung erfolgt vorzugsweise in der Parklage beziehungsweise der unteren Wendelage. Damit lässt sich das erfindungsgemäße Kontaktscheibensystem in vorteilhafter weise im Zusammenhang mit einem Pendelgetriebemotor mit Reversierelektronik einsetzen.

Ferner ist das Verfahren besonders dadurch vorteilhaft, dass nach dem Einschalten einer Zündung eines Kraftfahrzeuges beziehungsweise nach der Anwahl einer Scheibenwischerfunktion eine Initialisierung des Kontaktscheibensystems erfolgt, indem die Parkstellung verlassen wird und abhängig von der Änderung der Codierung auf die Polung des Scheibenwischermotors geschlossen wird. Im abgeschalteten Zustand der Zündung eines Kraftfahrzeuges wird sich der Scheibenwischer im Allgemeinen in Parkstellung befinden. Wird nun die Zündung wieder eingeschaltet, so ist der Steuerung im Allgemeinen die Polung des Scheibenwischermotors nicht bekannt. Daher kennt die Steuerung auch nicht die Bewegungsrichtung des Scheibenwischers. Zu diesem Zweck wird der Scheibenwischer mit der derzeit vorliegenden Polung des Scheibenwischermotors aus der Parkstellung hinausbewegt. In Abhängigkeit der benachbarten Codierung erhält die Steuerung dann Informationen über die Polung des Motors, wodurch alle Informationen im Hinblick auf eine spätere Inbetriebnahme vorliegen. Im Anschluss an die Initialisierung kann der Scheibenwischer wieder in die Parkstellung zurückgeführt werden. Damit bei der Initialisierung der Wischerhebel einen möglichst kleinen Winkel überstreicht, ist das Segment der Kontaktscheibe für die Parkstellung möglichst klein zu wählen.

Die Erfindung baut auf einem gattungsgemäßen Scheibenwischersystem dadurch auf, dass ein erfindungsgemäßes Kontaktscheibensystem vorgesehen ist. Damit werden die Vorteile des erfindungsgemäßen Kontaktscheibensystems und des erfindungsgemäßen Verfahrens in einem Scheibenwischermotor umgesetzt.

Der Erfindung liegt die überraschende Erkenntnis zugrunde, dass auch bei Situationen, bei denen nur eine begrenzte Anzahl von Kontaktbahnen, insbesondere zwei Kontaktbahnen, Anwendung finden können, eine ausreichende Anzahl von Zuständen codiert werden kann, die selbst die Steuerung von Heckwischermotoren mit erweiterter Parkstellung ermöglichen. Die Erfindung ist einsetzbar bei Pendelgetriebemotoren mit Reversierelektronik. Ferner kann die Betriebsweise der Waschwasserpumpe beeinflusst werden, indem diese nur beim Aufwärtswischen bestromt wird. Denn beim Aufwärtswischen geht der Bitkombination 0/0 die Bitkombination 1/1 voraus, während beim Abwärtswischen 0/0 auf 0/1 (obere Umkehrlage) folgt.

### Zeichnungen

Die Erfindung wird nun mit Besug auf die begleitenden Zeichnungen anhand bevorzugter Ausführungsformen beispielhaft erläutert.

Dabei zeigt:
- Figur 1: eine schematische Darstellung mehrerer codierter Zustände eines Kontaktschsibensystems; und
- Figur 2: eine erfindungsgentäße Kontaktscheibe.

### Beschreibung der Ausführungsbeispiele

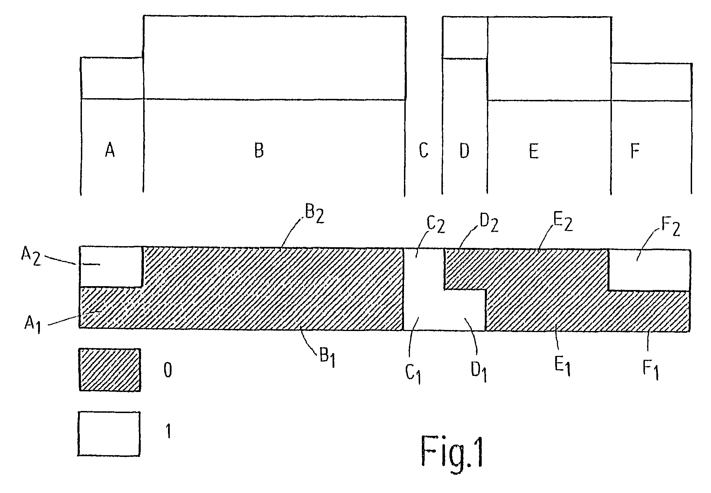

Figur 1 zeigt schematisch die verschiedenen logischen Zustände einer Kontaktscheibe. Die Bereiche entsprechen wie folgt den verschiedenen Wischerstellungen:

| | Zustand | Kontaktbahn 1 | Kontaktbahn 2 |
|---|---|---|---|
| A | obere Umkehrstellung | 0 | 1 |
| B | Wischfeld | 0 | 0 |
| C | Segment vor Parkstellung | 1 | 1 |
| D | Parkstellung | 1 | 0 |
| E | Segment nach Parkstellung | 0 | 0 |
| F | erweiterte Parkstellung | 0 | 1 |

Die schraffierten Flächen in der Darstellung gemäß Figur 1 sind elektrisch leitend. Die an die schraffierten Flächen anschließenden weißen Flächen sind elektrisch isolierend. Beispielsweise werden die elektrisch leitenden Flächen mit Masse Kontaktiert, so dass ein diese Fläche berührendes Kontaktelement ein Massesignal aufweist, welches logisch 0 entspricht.

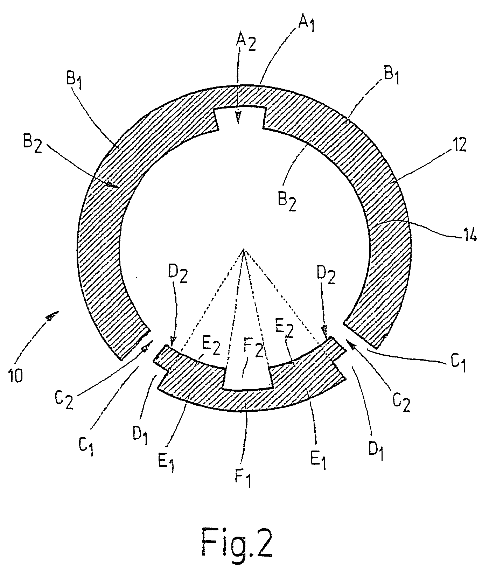

Figur 2 zeigt ein Ausführungsbeispiel einer erfindungsgemäßen Kontaktscheibe 10. Die Kontaktscheibe 10 hat 2 Bahnen 12, 14. Diese Bahnen sind in elektrisch leitende Bereiche und elektrisch nicht leitende Bereiche unterteilt, wobei die Bezeichnungen der Bereiche mit den Bezeichnungen aus Figur 1 übereinstimmen.

Befindet sich der Wischhebel nach dem Einschalten der Zündung im Wischfeld B, sieht die Steuerung die Bitkombination 0/0. Sie kann bislang nicht zwischen dem Segment nach der Parkstellung E und dem Wischfeld B unterscheiden. Im weiteren Verlauf geht der Wischer aus dem Wischfeld beispielsweise in das Segment vor der Parkstellung C über. Folglich erhält die Steuerung die Bitkombination 1/1. Damit ist für die Steuerung eindeutig, dass sich anfänglich der Wischer im Wischfeld B befunden hat. Hätte sich der Wischer nämlich in dem Segment nach der Parkstellung E befunden, so hätte die Steuerung eine Bitkombination 1/0 erhalten, welche der Parkstellung D entspricht, bevor sie die Bitkombination 1/1 erhielte.

Ebenfalls ist es möglich, auf der Grundlage der vorliegenden Codierung der Kontaktscheibe 10 eine Initialisierung nach dem Einschalten der Zündung vorzunehmen. Befindet sich nach dem Einschalten der Zündung der Wischhebel in Parkstellung D, so wird allein aus der Bitkombinarion 1/0, welche in Parkstellung an die Steuerung übermittelt wird, nicht deutlich, in welche Richtung sich der Wischerhebel bewegt, da die Polung des Motors nicht bekannt ist. Daher wird nach dem Einschalten der Zündung der Motor solange bestromt, bis das Parkstellungssegment D verlassen wird. Durch die eindeutige Codierung der benachbarten Segmente, einerseits das Segment vor der Parkstellung C (1/1) und andererseits das Segment nach der Parks-Teilung E (0/0), stellt die Steuerung sofort fest, in welche Richtung sich der Mischhebel bei der vorliegenden Polung bewegt. Diese Information wird gespeichert, und der Motor wird wieder umgepolt, um den Wischhebel in die Parkstellung D zurückzufahren. Für diese Initialisierung ist es sinnvoll, den Bereich der Parkstellung D möglichst klein zu wählen, damit der Wischhebel einen möglichst kleinen Winkel überstreicht. Ebenfalls ist es möglich, die Initialisierung wahlweise nach Einschalten der Zündung oder nach der Anwahl einer Scheibenwischerfunktion vorzunehmen.

Die obere Umkehrstellung A hat die Codierung 0/1. Wird diese Information an den Motor geliefert, finden keine Umpolung des Motors statt. Vielmehr wird die Drehrichtung der Kontaktscheibe beibehalten, da der Wischhebel in der oberen Umkehrstellung A über das Pendelgetriebe mechanisch reversiert wird. Wird die obere Umkehrstellung A verlassen, so liefert die Kontaktscheibe im weiteren Verlauf die Bitkombination 0/0 und danach die Bitkombination 1/1 wodurch der Steuerung eindeutig mitgeteilt wird, dass die Parkstellung D ausgehend von der oberen Umkehrstellung A angefahren wird. Würde sich der Wischhebel nach Einschalten der Zündung im Segment E nach der Parkstellung befinden, würde nach Bestromen des Motors die Parkstellung D erreicht werden, ohne dass die Bitkombination 1/1 für das Segment vor der Parkstellung C aufträte. Auch hierdurch würde die Richtung eindeutig festgelegt.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen, vorausgesetzt, daß die Erfindung durch die Ansprüche bestimmt ist.

## Patentansprüche

1. Kontaktscheibensystem mit
- einer Steuerung,
- einer drehbaren Kontaktscheibe (10) und
- mehreren Kontaktelementen,
- wobei die Kontaktscheibe (10) mehrere Bahnen (12, 14) aufweist und jedes Kontaktelement einer Bahn (12, 14) zugeordnet ist,
- wobei die Bahnen elektrisch leitende Bereiche (A₁, B₁, B₂, D₂, E₁, E₂, F₁) und elektrisch isolierende Bereiche (A₂, C₁, C₂, D₁, F₂) aufweisen und
- wobei durch die elektrisch leitenden Bereiche (A₁, B₁, B₂, D₂, E₁, E₂, F₁) und die elektrisch isolierenden Bereiche (A₂, C₁, C₂, D₁, F₂) logische Zustände codiert sind,
**dadurch gekennzeichnet,**
- **dass** die Kontaktscheibe (10) n Bahnen (12, 14) mit n ≥ 2 aufweist und
- **dass** durch die n Bahnen (12, 14) und durch die Abfolge der elektrisch leitenden Bereiche (A₁, B₁, B₂, D₂, E₁, E₂, F₁) und der elektrisch isolierenden Bereiche (A₂, C₁, C₂, D₁, F₂) N logische Zustände codiert werden, wobei N > 2ⁿ.

2. Kontaktscheibensystem nach Anspruch 1, **dadurch gekennzeichnet, dass** die Kontaktscheibe (10) zwei Bahnen (12, 14) aufweist.

3. Kontaktscheibensystem nach Anspruch 1 oder 2, **dadurch gekennzeichnet, dass** bei einer Kontaktscheibe (10) mit zwei Bahnen (12, 14) sechs logische Zustände (A, B, C, D, E, F) codiert werden.

4. Kontaktscheibensystem nach einem der vorangehenden Ansprüche, **dadurch gekennzeichnet,**
- **dass** ein erster Zustand (A) einer oberen Umkehrstellung entspricht,
- **dass** ein zweiter Zustand (B) einem Wischfeld entspricht,
- **dass** ein dritter Zustand (C) ein Zustand vor einer Parkstellung ist,
- **dass** ein vierter Zustand (D) eine Parkstellung ist,
- **dass** ein fünfter Zustand (E) ein Zustand nach einer Parkstellung ist und
- **dass** ein sechster Zustand (F) eine erweiterte Parkstellung ist.

5. Kontaktscheibensystem nach einem der vorangehenden Ansprüche, **dadurch gekennzeichnet,**
- **dass** im ersten Zustand (A) eine erste Bahn (A₁) elektrisch leitend ist und eine zweite Bahn (A₂) elektrisch isolierend ist,
- **dass** im zweiten Zustand (B) die erste Bahn (B₁) und die zweite Bahn (B₂) elektrisch leitend sind,
- **dass** im dritten Zustand (C) die erste Bahn (C₁) und die zweite Bahn (C₂) elektrisch isolierend sind,
- **dass** im vierten Zustand (D) die erste Bahn (D₁) elektrisch isolierend ist und die zweite Bahn (D₂) elektrisch leitend ist,
- **dass** im fünften Zustand (E) die erste Bahn (E₁) und die zweite Bahn (E₂) elektrisch leitend sind und
- **dass** im sechsten Zustand (F) die erste Bahn (F₁) elektrisch leitend ist und die zweite Bahn (F₂) elektrisch isolierend ist und
- **dass** die Zustände in der Reihenfolge ihrer Nummerierung aufeinanderfolgen.

6. Kontaktscheibensystem nach einem der vorangehenden Ansprüche, **dadurch gekennzeichnet,**
- **dass** zwei Kontaktelemente zum Abgreifen der Zustandsinformation vorgesehen sind und
- **dass** zwei Kontaktelemente zum Zuführen einer Versorgungsspannung vorgesehen sind.

7. Kontaktscheibensystem nach einem der vorangehenden Ansprüche, **dadurch gekennzeichnet,**
- **dass** die obere Umkehrstellung (A) und die untere Umkehrstellung EPS (F) mechanisch durch ein Pendelgetriebe realisiert sind,
- **dass** die Parkstellung (D) und die erweiterte Parkstellung (F) unteren Umkehrstellungen entsprechen und
- **dass** die untere Umkehrstellung in Parklage (D) durch Umpolen des Motors über die Steuerung realisiert ist.

8. Kontaktscheibensystem nach einem der vorangehenden Ansprüche, **dadurch gekennzeichnet, dass** nach dem Einschalten einer Zündung eines Kraftfahrzeuges beziehungsweise nach der Anwahl einer Scheibenwischerfunktion bei wischhebelpcsition in Parklage eine Initialisierung des Kontaktscheibensystems erfolgt, indem die Parkstellung (D) verlassen wird und abhängig von der Änderung der Codierung auf die polung des Scheibenwischermotors geschlossen wird.

9. Verfahren zum Steuern eines Scheibenwischermotors mit einem Kontaktscheibensystem, bei dem mit mehreren Kontaktelementen mehrere Bahnen (12, 14) einer drehbaren Kontaktscheibe (10) kontaktiert werden,
- wobei die Bahnen elektrisch leitende Bereiche (A₁, B₁, B₂, D₂, E₁, E₂, F₁) und elektrisch isolierende Bereiche (A₂, C₁, C₂, D₁, F₂) aufweisen und
- wobei durch die elektrisch leitenden Bereiche (A₁, B₁, B₂, D₂, E₁, E₂, F₁) und die elektrisch isolierenden Bereiche (A₂, C₁, C₂, D₁, F₂) logische Zustände codiert sind,
**dadurch gekennzeichnet,**
- **dass** die Kontaktscheibe (10) n Bahnen (12, 14) mit n ≥ 2 aufweist und
- **dass** durch die n Bahnen (12, 14) und durch die Abfolge der elektrisch leitenden Bereiche (A₁, B₁, B₂, D₂, E₁, E₂, F₁) und der elektrisch isolierenden Bereiche (A₂, C₁, C₂, D₁, F₂) N logische Zustände codiert werden, wobei N > 2ⁿ.

10. Verfahren nach Anspruch 9, **dadurch gekennzeichnet, dass** die Kontaktscheibe (10) zwei Bahnen (12, 14) aufweist.

11. Verfahren nach Anspruch 9 oder 10, **dadurch gekennzeichnet, dass** bei einer Kontaktscheibe (10) mit zwei Bahnen (12, 14) sechs logische Zustände (A, B, C, D, E, F) codiert werden.

12. Verfahren nach einem der Ansprüche 9 bis 11, **dadurch gekennzeichnet,**
- **dass** ein erster Zustand (A) einer oberen Umkehrstellung entspricht,
- **dass** ein zweiter Zustand (B) einem Wischfeld entspricht,
- **dass** ein dritter Zustand (C) ein Zustand vor einer Parkstellung ist,
- **dass** ein vierter Zustand (D) eine Parkstellung ist,
- **dass** ein fünfter Zustand (E) ein Zustand nach einer Parkstellung ist und
- **dass** ein sechster Zustand (F) eine erweiterte Parkstellung ist.

13. Verfahren nach einem der Ansprüche 9 bis 12, **dadurch gekennzeichnet,**
- **dass** im ersten Zustand (A) eine erste Bahn (A₁) elektrisch leitend ist und eine zweite Bahn (A₂) elektrisch isolierend ist,
- **dass** im zweiten Zustand (3) die erste Bahn (B₁) und die zweite Bahn (B₂) elektrisch leitend sind,
- **dass** im dritten Zustand (C) die erste Bahn (C₁) und die zweite Bahn (C₂) elektrisch isolierend sind,
- **dass** im vierten Zustand (D) die erste Bahn (D₁) elektrisch isolierend ist und die zweite Bahn (D₂) elektrisch leitend ist,
- **dass** im fünften Zustand (E) die erste Bahn (E₁) und die zweite Bahn (E₂) elektrisch leitend sind und
- **dass** im sechsten Zustand (F) die erste Bahn (F₁) elektrisch leitend ist und die zweite Bahn (F₂) elektrisch isolierend ist.

14. Verfahren nach einem der Ansprüche 9 bis 13, **dadurch gekennzeichnet,**
- **dass** zwei Kontaktelemente zum Abgreifen der Zustandsinformation vorgesehen sind und
- **dass** zwei Kontaktelemente zum Zuführen einer Versorgungsspannung vorgesehen sind.

15. Verfahren nach einem der Ansprüche 9 bis 14, **dadurch gekennzeichnet,**
- **dass** die obere Umkehrstellung (A) mechanisch durch ein Pendelgetriebe realisiert ist,
- **dass** die Parkstellung (D) und die erweiterte Parkstellung (F) unteren Umkehrstellungen entsprechen und
- **dass** die unteren Umkehrstellungen (D, F) durch Umpolen des Motors über die Steuerung realisiert sind.

16. Verfahren nach einem der Ansprüche 9 bis 15, **dadurch gekennzeichnet, dass** nach dem Einschalten einer Zündung eines Kraftfahrzeuges beziehungsweise nach der Anwahl einer Scheibenwischerfunktion bei Wischhebelposition in Parklage eine Initialisierung des Kontaktscheibensystems erfolgt, indem die Parkstellung (D) verlassen wird und abhängig von der Änderung der Codierung auf die Polung des Scheibenwischermotors geschlossen wird.

17. Scheibenwischermotor mit einem Kontaktscheibensystem nach einem der Ansprüche 1 bis 8.

## Claims

1. Contact disc system having
- a controller,
- a rotatable contact disc (10), and
- a plurality of contact elements,
- wherein the contact disc (10) has a plurality of tracks (12, 14) and each contact element is assigned to one track (12, 14),
- wherein the tracks have electrically conductive areas (A₁, B₁, B₂, D₂, E₁, E₂, F₁) and electrically insulating areas (A₂, C₁, C₂, D₁, F₂), and
- wherein logic states are coded by means of the electrically conductive areas (A₁, B₁, B₂, D₂, E₁, E₂, F₁) and the electrically insulating areas (A₂, C₁, C₂, D₁, F₂),
**characterized**
- **in that** the contact disc (10) has n tracks (12, 14) with n ≥ 2, and
- **in that** N logic states are coded by the n tracks (12, 14) and by the sequence of electrically conductive areas (A₁, B₁, B₂, D₂, E₁, E₂, F₁) and electrically insulating areas (A₂, C₁, C₂, D₁, F₂), where N > 2ⁿ.

2. Contact disc system according to Claim 1, **characterized in that** the contact disc (10) has two tracks (12, 14).

3. Contact disc system according to Claim 1 or 2, **characterized in that** six logic states (A, B, C, D, E, F) are coded in the case of a contact disc (10) with two tracks (12, 14).

4. Contact disc system according to one of the preceding claims, **characterized**
- **in that** a first state (A) corresponds to an upper reverse position,
- **in that** a second state (B) corresponds to a wiper field,
- **in that** a third state (C) is a state ahead of a parked position,
- **in that** a fourth state (D) is a parked position,
- **in that** a fifth state (E) is a state after a parked position, and
- **in that** a sixth state (F) is an extended parked position.

5. Contact disc system according to one of the preceding claims, **characterized**
- **in that** in the first state (A) a first track (A₁) is electrically conductive and a second track (A₂) is electrically insulating,
- **in that** in the second state (B) the first track (B₁) and the second track (B₂) are electrically conductive,
- **in that** in the third state (C) the first track (C₁) and the second track (C₂) are electrically insulating,
- **in that** in the fourth state (D) the first track (D₁) is electrically insulating and the second track (D₂) is electrically conductive,
- **in that** in the fifth state (E) the first track (E₁) and the second track (E₂) are electrically conductive, and
- **in that** in the sixth state (F) the first track (F₁) is electrically conductive and the second track (F₂) is electrically insulating, and
- **in that** the states follow one another in the sequence of their numbering.

6. Contact disc system according to one of the preceding claims, **characterized**
- **in that** two contact elements are provided for tapping the state information, and
- **in that** two contact elements are provided for feeding in a supply voltage.

7. Contact disc system according to one of the preceding claims, **characterized**
- **in that** the upper reverse position (A) and the lower reverse position EPS (F) are implemented mechanically by means of an oscillating gear mechanism,
- **in that** the parked position (D) and the extended parked position (F) correspond to lower reversal positions, and
- **in that** the lower reversal position in the parked position (D) is implemented by reversing the polarity of the motor by means of the controller.

8. Contact disc system according to one of the preceding claims, **characterized in that** after an ignition system of a motor vehicle has been switched on or after a windscreen wiper function has been selected with the windscreen lever position in the parked position, the contact disc system is initialized by the wiper leaving the parked position (D) and the polarity of the windscreen wiper motor being inferred from the change in the coding.

9. Method for controlling a windscreen wiper motor having a contact disc system in which contact is made between a plurality of contact elements and a plurality of tracks (12, 14) of a rotatable contact disc (10),
- wherein the tracks have electrically conductive areas (A₁, B₁, B₂, D₂, E₁, E₂, F₁) and electrically insulating areas (A₂, C₁, C₂, D₁, F₂), and
- wherein logic states are coded by means of the electrically conductive areas (A₁, B₁, B₂, D₂, E₁, E₂, F₁) and the electrically insulating areas (A₂, C₁, C₂, D₁, F₂),
**characterized**
- **in that** the contact disc (10) has n tracks (12, 14) with n ≥ 2, and
- **in that** N logic states are coded by the n tracks (12, 14) and by the sequence of electrically conductive areas (A₁, B₁, B₂, D₂, E₁, E₂, F₁) and electrically insulating areas (A₂, C₁, C₂, D₁, F₂), where N > 2ⁿ.

10. Method according to Claim 9, **characterized in that** the contact disc (10) has two tracks (12, 14).

11. Method according to Claim 9 or 10, **characterized in that** six logic states (A, B, C, D, E, F) are coded in the case of a contact disc (10) with two tracks (12, 14).

12. Method according to one of Claims 9 to 11, **characterized**
- **in that** a first state (A) corresponds to an upper reverse position,
- **in that** a second state (B) corresponds to a wiper field,
- **in that** a third state (C) is a state ahead of a parked position,
- **in that** a fourth state (D) is a parked position,
- **in that** a fifth state (E) is a state after a parked position, and
- **in that** a sixth state (F) is an extended parked position.

13. Method according to one of Claims 9 to 12, **characterized**
- **in that** in the first state (A) a first track (A₁) is electrically conductive and a second track (A₂) is electrically insulating,
- **in that** in the second state (B) the first track (B₁) and the second track (B₂) are electrically conductive,
- **in that** in the third state (C) the first track (C₁) and the second track (C₂) are electrically insulating,
- **in that** in the fourth state (D) the first track (D₁) is electrically insulating and the second track (D₂) is electrically conductive,
- **in that** in the fifth state (E) the first track (E₁) and the second track (E₂) are electrically conductive, and
- **in that** in the sixth state (F) the first track (F₁) is electrically conductive and the second track (F₂) is electrically insulating.

14. Method according to one of Claims 9 to 13, **characterized**
- **in that** two contact elements are provided for tapping the state information, and
- **in that** two contact elements are provided for feeding in a supply voltage.

15. Method according to one of Claims 9 to 14, **characterized**
- **in that** the upper reversal position (A) is implemented mechanically by means of an oscillating gear mechanism,
- **in that** the parked position (D) and the extended parked position (F) correspond to lower reversal positions, and
- **in that** the lower reversal positions (D, F) are implemented by reversing the polarity of the motor by means of the controller.

16. Method according to one of Claims 9 to 15, **characterized in that** after an ignition system of a motor vehicle has been switched on or after a windscreen wiper function has been selected with the windscreen lever position in the parked position, the contact disc system is initialized by the wiper leaving the parked position (D) and the polarity of the windscreen wiper motor being inferred from the change in the coding.

17. Windscreen wiper motor having a contact disc system according to one of Claims 1 to 8.

## Revendications

1. Système de disque de contact comportant :
- une commande,
- un disque de contact rotatif (10), et
- plusieurs éléments de contact,
- le disque de contact (10) ayant plusieurs chemins (12, 14) et chaque élément de contact est associé à un chemin (12, 14),
- les chemins ayant des zones électroconductrices (A₁, B₁, B₂, D₂, E₁, E₂, F₁) et des zones isolantes (A₂, C₁, C₂, D₁, F₂), et
- les zones électroconductrices (A₁, B₁, B₂, D₂, E₁, E₂, F₁) et les zones isolantes (A₂, C₁, C₂, D₁, F₂) codent des états logiques,
**caractérisé en ce que**
- le disque de contact (10) comporte n chemins (12, 14) avec n ≥ 2 et
- les n chemins (12, 14) et la suite des zones électroconductrices (A₁, B₁, B₂, D₂, E₁, E₂, F₁) et des zones isolantes (A₂, C₁, C₂, D₁, F₂) permettent de coder N états logiques avec N > 2ⁿ.

2. Système de disque de contact selon la revendication 1,
**caractérisé en ce que**
le disque de contact (10) comporte deux chemins (12, 14).

3. Système de disque de contact selon les revendications 1 ou 2,
**caractérisé en ce qu'**
un disque de contact (10) à deux chemins (12, 14) code six états logiques (A, B, C, D, E, F).

4. Système de disque de contact selon l'une des revendications précédentes,
**caractérisé en ce qu'**
- un premier état (A) correspond à une position d'inversion supérieure,
- un second état (B) correspond à un champ d'essuyage,
- un troisième état (C) correspond à l'état précédent la position de rangement,
- un quatrième état (D) correspond à la position de rangement,
- un cinquième état (E) correspond à un état après une position de rangement, et
- un sixième état (F) correspond à une position de rangement étendue.

5. Système de disque de contact selon l'une des revendications précédentes,
**caractérisé en ce que**
- dans un premier état (A) un premier chemin conducteur (A₁) est électroconducteur et un second chemin (A₂) est isolant,
- dans un second état (B), le premier chemin (B₁) et le second chemin (B₂) sont électroconducteurs,
- dans un troisième état (C), le premier chemin (C₁) et le second chemin (C₂) sont isolés,
- dans le quatrième état (D), le premier chemin (D₁) est isolé et le second chemin (D₂) est électroconducteur,
- dans le cinquième état (E), le premier chemin (E₁) et le second chemin (E₂) sont électroconducteurs,
- dans le sixième état (F), le premier chemin (F₁) est électroconducteur et le second chemin (F₂) est isolant, et
- les états se suivent dans l'ordre de leur numérotation.

6. Système de disque de contact selon l'une des revendications précédentes,
**caractérisé en ce que**
- deux éléments de contact servent à détecter l'information d'état, et
- deux éléments de contact sont prévus pour appliquer une tension d'alimentation.

7. Système de disque de contact selon l'une des revendications précédentes,
**caractérisé en ce que**
- la position d'inversion haute (A) et la position d'inversion basse EPS (F) sont réalisées mécaniquement par un entraînement pendulaire,
- la position de rangement (D) et la position de rangement étendu (F) correspondent aux positions d'inversions inférieures, et
- la position d'inversion inférieure en position de rangement (D) est réalisée par le changement de pôles du moteur par la commande.

8. Système de disque de contact selon l'une des revendications précédentes,
**caractérisé en ce qu'**
après le branchement de l'allumage d'un moteur à combustion interne ou après la sélection d'une fonction d'essuie-glace pour la position du levier d'essuie-glace en position de rangement, il y a initialisation du système de disque de contact en quittant la position de rangement (D) et en fonction de la variation du codage on conclut à la polarité du moteur d'essuie-glace.

9. Procédé de commande d'un moteur d'essuie-glace comportant un système de disque de contact selon lequel plusieurs éléments de contact de plusieurs bandes (12, 14) d'un disque de contact (10) rotatif sont mis en contact,
- les chemins ont des zones électroconductrices (A₁, B₁, B₂, D₂, E₁, E₂, F₁) et des zones isolantes (A₂, C₁, C₂, D₁, F₂), et
- les zones électroconductrices (A₁, B₁, B₂, D₂, E₁, E₂, F₁) et les zones isolantes (A₂, C₁, C₂, D₁, F₂) assurent le codage d'état logique,
**caractérisé en ce que**
- le disque de contact (10) comporte n chemins (12, 14) avec n ≥ 2 et
- les n chemins (12, 14) et la suite des zones électroconductrices (A₁, B₁, B₂, D₂, E₁, E₂, F₁) et des zones isolantes (A₂, C₁, C₂, D₁, F₂) permettent de coder N états logiques avec N > 2ⁿ.

10. Procédé selon la revendication 9,
**caractérisé en ce que**
le disque de contact (10) comporte deux chemins (12, 14).

11. Procédé selon la revendication 9 ou 10,
**caractérisé en ce que**
dans le cas d'un disque de contact (10) ayant deux chemins (12, 14) on peut coder six états logiques (A, B, C, D, E, F).

12. Procédé selon l'une des revendications 9 à 11,
**caractérisé en ce qu'**
- un premier état (A) correspond à la position d'inversion supérieure,
- un second état (B) correspond à un champ d'essuyage,
- un troisième état (C) correspond à un état précédant la position de rangement,
- un quatrième état (D) est une position de rangement,
- un cinquième état (E) est un état faisant suite à la position de rangement,
- un sixième état (F) est une position de rangement étendue.

13. Procédé selon l'une des revendications 9 à 12,
**caractérisé en ce que**
- dans un premier état (A), un premier chemin (A₁) est électroconducteur et un second chemin (A₂) est isolé,
- dans un second état (B), le premier chemin (B₁) et le second chemin (B₂) sont électroconducteurs,
- dans un troisième état (C), le premier chemin (C₁) et le second chemin (C₂) sont isolés,
- dans un quatrième état (D), le premier chemin (D₁) est isolé et le second chemin (D₂) est électroconducteur,
- dans un cinquième état (E), le premier chemin (E₁) et le second chemin (E₂) sont électroconducteurs, et
- dans un sixième état (F), le premier chemin (F₁) est électroconducteur et le second chemin (F₂) est isolant.

14. Procédé selon l'une des revendications 9 à 13,
**caractérisé en ce que**
- deux éléments de contact détectent l'information d'état, et
- deux éléments de contact sont prévus pour transmettre une tension d'alimentation.

15. Procédé selon l'une des revendications 9 à 14,
**caractérisé en ce que**
- la position d'inversion supérieure (A) est réalisée mécaniquement par une transmission pendulaire,
- la position de rangement (D) et la position de rangement étendue (F) correspondent aux positions d'inversion inférieures, et
- les positions d'inversion inférieures (D, F) sont réalisées par le changement de polarité du moteur par la commande.

16. Procédé selon l'une des revendications 9 à 15,
**caractérisé en ce qu'**
après le branchement de l'allumage d'un véhicule ou après la sélection d'une fonction d'essuie-glace avec le levier de commande d'essuie-glace en position de rangement, on initialise le système de disque de contact en quittant la position de rangement (D) et en fonction de la variation du codage on conclut à la polarité du moteur d'essuie-glace.

17. Moteur d'essuie-glace comportant un système de disque de contact selon l'une des revendications 1 à 8.
